# EUROPEAN PATENT APPLICATION

(11) **EP 1 533 883 A1**
(43) Date of publication of application: **25.05.2005**
(21) Application number: 04105568.2
(22) Date of filing: 05.11.2004
(51) Int. Cl.: H02K 1/27, H02K 5/12, H02K 15/03

(54) **Quickly assembled permanent magnet rotor for electric motor, and constructional method therefor**

(30) Priority: 18.11.2003 IT MI20032241
(71) Applicant: SISME IMMOBILIARE S.p.A., 22077 Olgiate Comasco (Como) (IT)
(72) Inventor: Corengia, Alfonso, 22073, Fino Mornasco (Como) (IT)
(74) Representative: Ripamonti, Enrico, Dr. Ing.

(57) **Abstract**

A permanent magnet rotor (1) of the type to be inserted into an electric motor stator comprises a core (2), a drive shaft (3) emerging from the opposing ends of the core (2), and a container casing (4) in which the core (2) is positioned and from which the drive shaft (3) emerges, at least one curved magnetic element (7) being present between said core (2) and the inner wall (27) of said container casing (4).

The core (2) comprises deformable radial projections (25) arranged to act on the opposing lateral ends of said at least one magnetic element (7) such as to urge this latter radially towards said inner wall (27) of said container casing (4).

The method for constructing the rotor is also claimed.

## Description

The present invention relates to a permanent magnet rotor for an electric motor in accordance with the introduction to the independent claim.

In the case of small motors with a ceramic-type (ferrite) permanent magnet rotor positioned within the stator, it is known to generally construct the rotor such that it comprises a core of ferromagnetic material and a drive shaft projecting from said core at its opposing ends, said core being inserted, together with the magnets, into a metal or non-metal cylindrical element or container casing, or the whole assembly being co-moulded with plastic material to obtain a single element. The ferromagnetic core can be constructed with magnetic laminations which are punched out, stacked and held together for example by special press studs.

Specifically, to construct a rotor with more than two poles, magnetic elements (ferrites) of arcuate section are used, interposed between the core and the inner wall of the container casing, if present. The number of said magnetic elements or magnetized segments is generally equal to the number of motor poles or to the number of pole pairs. These elements or magnetic segments are positioned on the outer diameter of the constituent magnetic laminations of the core of the rotor, if of the type internal to the stator, in order to close the magnetic flux lines.

Finally, in a rotor of the stated type, mechanical, plastic or chemical (such as glue-like) elements are generally present to maintain the said rotor components fixed together to ensure their position during the stresses deriving from the maximum scheduled rotation, possibly also using co-moulding with plastic materials.

The constructional criteria to be used in assembling the said rotor must also take into consideration the following aspects:
- type of application and the environment in which the rotor is to rotate
- cost minimization
- minimization of the level of unbalance due to the large dimensional tolerances on the magnetic segments and their consequent possibly bad angular and radial positioning.

With particular reference to a rotor of the stated type, with or without arcuate magnetic segments, it is known to use it immersed in a fluid, for example in constructing small synchronous or brushless d.c. motor-driven pumps where the permanent magnet rotor is immersed in the fluid to be pumped; such pumps are used in the domestic sector (wash pump in dishwashers, water circulators for heating installations, fountain pumps, etc.) and in the industrial sector (pumps in general).

In such uses the fluid, composed mostly of water, could potentially attack the generally present ferromagnetic core, which is not stainless for cost reduction reasons (the ferrite segments are inert and the shaft is generally of stainless steel), with consequent formation of rust which, besides undermining the mechanical structure of the rotor, is highly undesirable if for example leaving a residue on crockery within the wash compartment of a dishwasher.

A rotor of the said type must therefore be constructed such as to ensure protection against fluid infiltration into its interior and hence prevent contact between said fluid and the ferromagnetic core to prevent its damage by corrosion or chemical attack.

Although known rotors of the stated type adequately prevent any fluid infiltration into their interior, they have a large number of components resulting in considerable costs and assembly times. Moreover the magnetic segments located in their interior are not always optimally positioned because of their large dimensional tolerances or do not always remain in position for the entire working life of the motor of which the rotor forms part, with consequent possible rotor unbalance beyond acceptable limiting values.

An object of the present invention is therefore to provide a rotor and a method for its construction which are improved compared with known rotors and the methods used up to the present time for their construction.

A particular object of the invention is to provide a rotor of the stated type comprising a small number of components, hence enabling its constructional time and cost to be reduced, said small component number ensuring optimum handling in relation to industrial automation for high production levels.

Another object is to provide a rotor of the stated type enabling the magnetic segments to be angularly and radially positioned in an optimum manner to ensure that the rotor unbalance level is contained within acceptable values.

A further object is to provide a rotor of the stated type with ensured sealing against fluids for its entire life, enabling it to be used immersed in a fluid (in particular a liquid) without suffering any damage to its internal components.

These and further objects which will be apparent to the expert of the art are attained by a rotor and a method for its construction in accordance with the accompanying claims.

The present invention will be more apparent from the accompanying drawing, which is provided by way of non-limiting example and in which:
Figure 1 is an exploded view of a rotor constructed in accordance with the invention;
Figure 2 is a perspective view in partial section of the assembled rotor of Figure 1;
Figure 3 is a perspective view of part of the rotor of Figure 1; and
Figure 4 is a perspective view of the rear of the assembled rotor of Figure 1, with a part removed for greater clarity.

With reference to said figures, a rotor according to the invention is indicated overall by 1 and comprises a ferromagnetic core 2, for example cylindrical of circular cross-section, constructed of stacked magnetic laminations joined together in known manner, for example by press studding. The core 2 is keyed onto a shaft (or drive shaft) 3, and is inserted into a container casing 4 defined by a preferably very thin cylindrical cup-shaped body 5, for example obtained by drawing (or other known method) a stainless steel strip, suitable to contain said core and magnetic elements 7 disposed about the core 2. Each magnetic element (or segment) is defined by a body 8 of substantially arcuate shape.

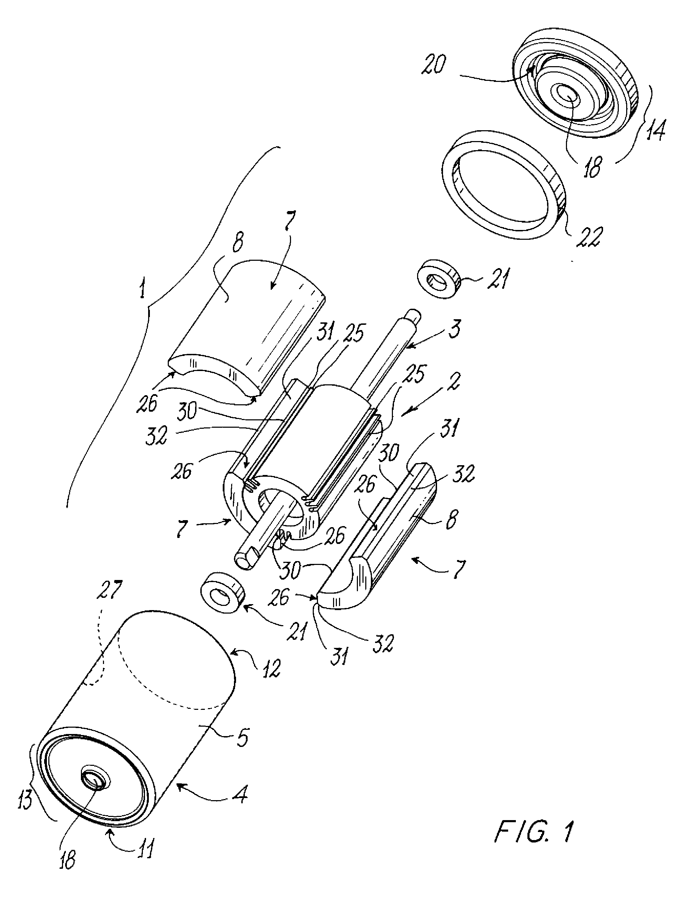

The shaft 3, of known type and configuration, is of generally amagnetic stainless steel; it emerges from the ends 11 and 12 of the container casing which is closed by closure elements 13 and 14; one of these latter, for example the element 13, can be integral with the casing 4. The other closure element 14 (or both) is formed by drawing (or other known method) a stainless steel strip and is fixed to the corresponding open end (in the example, that indicated by 12 in Figure 1) by clinching, welding or other known method. Each closure element 13, 14 (or cover) presents a through hole 18 allowing passage of the shaft 3; the closure element is shaped on that side 20 facing the interior of the container casing 4 in a manner to contain two annular seal elements 21, 22. These seal elements (of variable form, material, shape and number) are suitably selected on the basis of the rotor application and are to be used mainly in the case of a rotor immersed in a fluid (for example, if the electric motor is associated with a dishwasher pump). The seal elements 21, 22 ensure protection against fluid infiltration into the rotor 1 and hence prevent its contact with the rotor.

According to the invention, the core comprises a plurality of radially projecting fins 25 to be positioned along the opposing lateral ends 26 of the magnetic element or elements 7.

These latter act against said fins 25, which generate on each magnetic element 7 a radial thrust directed towards the inner wall 27 of the container casing 4, this thrust ensuring correct positioning of the magnetic element within the casing 4 and around the core 2.

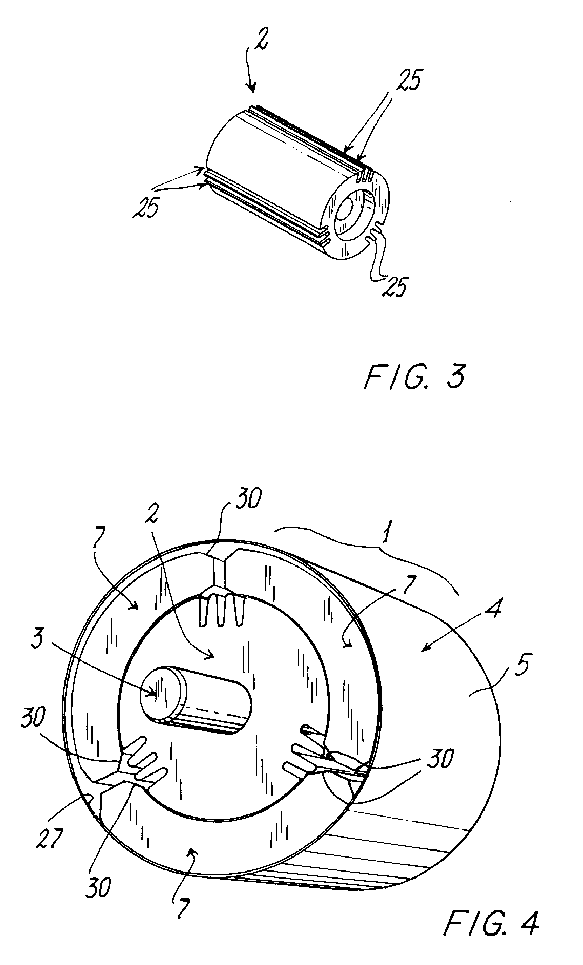

More specifically, the core comprises at least one pair of radial ly projecting fins 25 for each joining region of two adjacent magnetic segments. With reference to the figures, the rotor shown therein comprise three pairs of fins positioned substantially 120° apart and projecting outwards from the rotor. Each fin acts on a corresponding lateral end 26 of a magnetic element 7 (which in Figure 4 are three in number).

In particular, the said lateral end comprises a plurality of mutually angled portions 30, 31 and 32: the end portions 30 and 32 have opposing inclinations, the portion 30 (closer to the core 2) being arranged to contactingly cooperate with the fins 25. This cooperation between each magnetic element and the adjacent fins 25 enables reliable positioning of said elements 7 to be obtained.

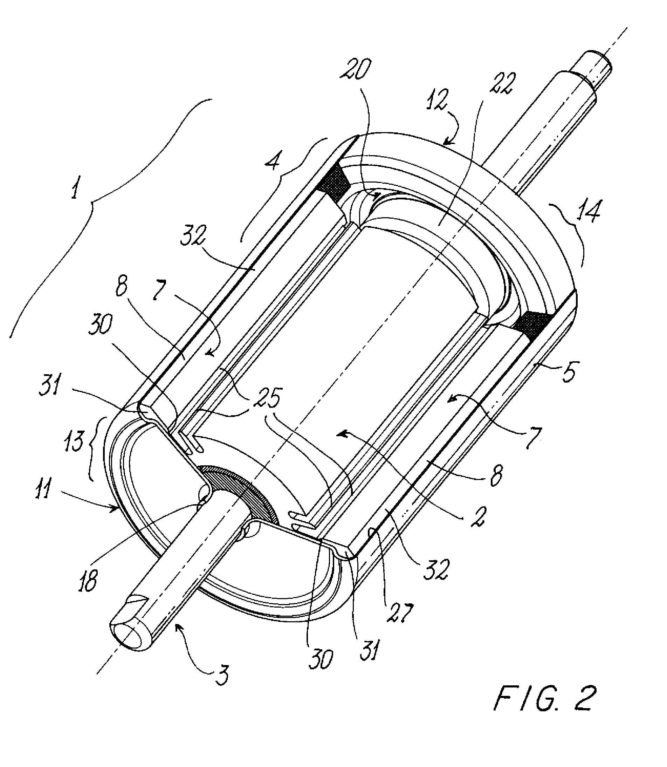

In this respect the core 2, into which the shaft 3 is fixed, is positioned in the cup-shaped body 5 of the container casing 4, possibly with the addition of the seal elements 21, 22 (for example of rubber) suitably mounted on the shaft at that end which is to be inserted into the cup (see Figure 2). During this insertion, the magnetic elements or segments 7 disposed around the core 2 are urged with a slight force towards the inner surface 27 of the cup-shaped body 5 by the outer surface of the core 2 and by the fins 25 provided on the core.

The magnetic elements or segments 7 hence rest with the portions 30 of their ends 26 against the fins, which are able to flex under force, while at the same time generating on said magnetic segments a reliable radial thrust against the body 5 so that they make secure contact with the core 2. The assembly formed in this manner consists of forced rather than slack magnetic elements 7, said magnetic elements or segments being properly positioned not only angularly, even if their dimension is subject to large tolerances, but also at the same time radially, notwithstanding the tolerances on the radial dimensions of said element 7.

This also ensures a good level of balancing of the rotor 2.

By virtue of the invention, a rotor is obtained comprising permanent magnets consisting of several arcuate elements or segments starting from mechanical elements easily handled in relation to industrial automation for high production levels, with the objective of obtaining an assembly which is on average well balanced and able to be immersed in a liquid/fluid without damage to the internal components by being provided, if necessary, with seal elements between the assembled parts.

A specific embodiment of the invention has been described. In the light of the aforegoing description a core 2 of different configuration than that described can be inserted into the container casing 4, as can a single magnetic element (for example of hollow cylindrical shape on which one or more pairs of fins act internally to lock it within said casing 4), said magnetic element being of a different material from that described (including for example rare earths).

## Claims

1. A permanent magnet rotor (1) of the type to be inserted into an electric motor stator, said rotor comprising a core (2), a drive shaft (3) emerging from the opposing ends of the core (2), and a container casing (4) in which the core (2) is positioned and from which the drive shaft (3) emerges, at least one curved magnetic element (7) being present between said core (2) and the inner wall (27) of said container casing (4), **characterised in that** the core (2), constructed of punched and stacked laminations, comprises deformable radial projections (25) arranged to act on the opposing lateral ends of said at least one magnetic element (7) such as to urge this latter radially towards said inner wall (27) of said container casing (4).

2. A rotor as claimed in claim 1, **characterised in that** the radial projections (25) define at least one pair of projections (25) operating on the two ends of each said magnetic element, such as to generate on the magnetic element both a radial thrust and an angular centering effect, so contributing to a greater level of balancing of the rotor assembly.

3. A rotor as claimed in claim 2, **characterised by** comprising equidistant projection pairs (25) between which the magnetic elements (7) are disposed.

4. A rotor as claimed in claim 1, **characterised in that** each magnetic element (7) has opposing lateral ends (26) each comprising a plurality of mutually angled portions (30, 31, 32), one (30) of these portions (30, 31, 32) acting against a corresponding projection (25).

5. A rotor as claimed in claim 1, **characterised in that** each projection (25) is flexible under the thrust of the adjacent magnetic element.

6. A rotor as claimed in claim 1, **characterised in that** each projection (25) projects from the body of the core (2).

7. A rotor as claimed in claim 1, **characterised in that** the container casing (4) is of cup-shape obtained by drawing stainless steel strip and presents at one end an outlet for the stainless steel shaft (3) which well adheres to this latter, while at its other end it accepts a closure cover obtained by drawing stainless steel strip and presenting an outlet well adhering to the said drive shaft (3), it being of suitable shape to possibly receive other elements externally and at the same time to internally compress any seals (22) and (21) against the casing (4).

8. A rotor as claimed in claims 1 and 7, **characterised by** comprising seal members (21, 22) enabling the rotor to rotate within a liquid, said seal members (21, 22) being positioned on the interior of the container casing (4) to protect the elements contained therein.

9. A method for constructing a permanent magnet rotor (1) of the type to be inserted into an electric motor stator, said rotor comprising a core (2), a drive shaft (3) emerging from the opposing ends of the core (2), and a cup-shaped drawn container casing (4) in which the core (2), formed from punched and stacked laminations, is positioned and from which the drive shaft (3) emerges, at least one curved magnetic element (7) being present between said core (2) and the inner wall (27) of said container casing (4), **characterised by** consisting of: forming a plurality of projections (25) projecting radially from each constituent lamination of the core (2) of the rotor (1), disposing on said core (2) said magnetic element such that its lateral ends (26) rest against said projections (25), and inserting the resultant combination into said hollow casing (4), during which insertion the projections flex to generate a thrust on said magnetic element (7) such as to urge it towards the inner wall (27) of said container casing (4), so angularly positioning it in such a manner as to securely retain it in the position thus obtained.

10. A method as claimed in claim 9, **characterised by** adding rubber seal members (21, 22) to the interior of the container casing (4) at the shaft outlets, then joining the container casing (4), the cup and the cover (14) together.

11. A method as claimed in claim 9, **characterised in that** after inserting the core (2) with the shaft (3) and the magnetic elements (7), a resin or plastic material is injected or poured into the container casing (4).
